# EUROPEAN PATENT SPECIFICATION

(11) **EP 0 978 350 B1**
(45) Date of publication and mention of the grant of the patent: **01.03.2006**
(21) Application number: 98957214.4
(22) Date of filing: 07.12.1998
(51) Int. Cl.: B23Q 11/10, B23B 39/16, B23Q 1/00

(54) **MAIN SPINDLE APPARATUS FOR MACHINE TOOLS, AND MULTISPINDLE HEAD FOR MACHINE TOOLS**
VORRICHTUNG FÜR DIE HAUPTSPINDEL EINER WERKZEUGMASCHINE UND MEHRSPINDELKOPF FÜR WERKZEUGMASCHINEN
ENSEMBLE BROCHE PRINCIPAL ET TETE MULTIBROCHE POUR MACHINES-OUTILS

(30) Priority: 23.01.1998 JP 2649798; 26.01.1998 JP 2932398; 02.02.1998 JP 3666098
(43) Date of publication of application: 09.02.2000
(73) Proprietor: Horkos Corp, Fukuyama-shi, Hiroshima-ken 720-0831 (JP)
(72) Inventor: SUGATA, Shinsuke, Fukuyama-shi Hiroshima-ken 720-0831 (JP)
(74) Representative: Kramer - Barske - Schmidtchen
(86) International application number: PCT/JP1998/005531
(87) International publication number: WO 1999/037439

(56) References cited:
- JP-A- 4 144 709
- JP-A- 4 189 445
- JP-A- 7 164 277
- JP-U- 1 071 049
- JP-U- 59 017 147

## Description

### FILED OF THE INVENTION

The present invention relates to a spindle device for machine tool and a multi spindle head therefor.

### BACKGROUND OF THE INVENTION

In machining with a machine tool, a large amount of cutting oil is supplied to a machining position in order to cool down and lubricate a workpiece and a tool, or to eliminate cutting chips. However, cutting oil arises various problems such as environmental pollution, adverse influence on human health, high cost in treating waste oil, lower longevity of tools due to excessive cooling of workpieces, firictional wearing of tools due to excessive cutting oil, etc. In addition, since a large amount of cutting oil adheres to cutting chips during machining, it is necessary to separate cutting oil from cutting chips, if re-utilizing the cutting chips.

In order to solve these problems, a very small amount of cutting oil has been atomized and supplied to a machining position of the workpiece in recent years. This treatment is called dry cutting.

In this dry cutting, it is easy to supply a mist of cutting oil to the tip of a tool during machining comparatively shallow parts of a workpiece, but it is difficult during machining comparatively deep parts. The applicant of this invention has proposed a Japanese Patent No. 2687110 to overcome the above difficulty.

A spindle device in the Japanese Patent No. 2687110 can effectively supply a mist of cutting oil to a tool during machining comparatively deep parts of a workpiece. However, its structure is complicated, and cost increases substantially in some uses.

JP 4189445 A discloses a spindle device for a machine tool in which a hollow hole is provided at a spindle and a center hole for supplying cooling medium, such as a coolant liquid and cooling air, is provided at a fixed nozzle. The fixing nozzle and the center hole for supplying cooling medium fixed thereto are not contacted to the inner hole of the spindle through the whole range of the length and a clearance is for example made 0,02 to 0,1 mm in width. The rotatable spindle is provided into a rotary joint. A leakage of cutting fluid along the fixing nozzle through the clearance between center hole and the fixing nozzle occurs and is to be collected at the opening part as drain.

JP 7164277 A discloses a multi spindle drilling machine, wherein a through hole for cutting oil is provided at the center of each spindle in longitudinal direction thereof and a through hole for cutting oil is provided in a tool at the tip of each spindle, wherein these through holes for cutting oil provided in the tool at the tip of each spindle communicate with each other. The cutting oil supply pipe is rotating with the rotation of the spindle.

In a multi spindle head for machine too, plural spindles, each fixing a cutting edge at the tip thereof, are arranged in a same direction with more than certain density. Dry cutting is also occasionally required in this multi spindle head.

Since the spindles are densely arranged in the above multi spindle head, it is difficult to supply a mist of cutting oil to all tools equally even during machining comparatively shallow parts of a workpiece. It is much more difficult when it comes to machining comparatively deep parts.

If the Japanese Patent No. 2687110 is applied to this multi spindle to settle the above problem, there arise the same problems as a complicated structure and very high cost.

Especially in the multi spindle head, cost increases in proportion to the number of spindles. Besides, a structure inside the spindle is complicated, thereby enlarging its diameter. Accordingly, it becomes difficult to keep a dense arrangement of spindles.

Therefore, an object of the invention is to provide a spindle device and a multi spindle head for machine tool to overcome the above problems.

This object is solved by a spindle device comprising the features of claim 1 and a multi spindle head comprising the features of Claim 2. Preferred embodiments are defined by the dependent claims.

In this invention, the main spindle rotates during machining a workpiece. However, during rotations of the main spindle, the cutting oil supply pipe remains irrotational, supplying a mist of cutting oil around the tool holder as well as the tool. Here, the mist flowing inside the cutting oil supply pipe is never affected by rotations of the main spindle, thereby flowing smoothly with a uniformly distributed state. Accordingly, the cutting oil is supplied to the tip of the tool stably as well as comaratively equally, thereby effectively lubricating the tip of the tool machining deep parts of the workpiece.

According to this invention, as described above, the tip of the tool machining comparatively deep parts can be lubricated equally, surely, and stably by a comparatively simple method of the cutting oil supply pipe which is irrotatably provided into the main spindle. Because the cutting oil supply pipe is irrotatably provided, this invention requires no rotary joint, which is conventionally used in supplying fluid from a fixed position to the main spindle during its rotations, thereby simplifying its structure.

A multi spindle head for machine tool comprises plural spindles arranged in the same direction, each of which has a tool at the tip thereof, a through hole for cutting oil provided at the center of the spindle in longitudinal direction thereof, and a through hole for cutting oil provided in the tool at the tip of the spindle. The through hole communicates with the through hole provided at the center, and a mist of cutting oil is supplied into the through hole from the outside.

According to this invention, a mist of cutting oil reaches the through hole for cutting oil of each tool via the through hole for cutting oil of each spindle, and spouts from the tip of each tool. Accordingly, even though the tool is cutting comparatively deep parts of the workpiece, required parts of the tool are lubricated.

In addition, since only the through hole for cutting oil is provided inside the spindle, a diameter of the spindle can be diminished, thereby gathering plural spindles closely in a narrow space as well as miniaturizing the device. Besides, because of its simple structure, the device can reduce the cost as well as mechanical failure. Moreover, it can be managed easily.

In the structure according to claim 4, a mist of cutting oil can be supplied from the outer periphery of the spindle at the middle of the length thereof, and spouted from the tip of a tool.

In the structure according to claim 5, a mist of cutting oil can be supplied from the outer periphery of the spindle at the tip thereof, and spouted from the tip of a tool.

In this invention, a mist of cutting oil reaches the through hole for cutting oil in the tool from the closed room through the cutting oil supply pipe, and spouts from the tip of the tool. Because the cutting oil supply pipe remains irrotational regardless of rotations of the spindle, the mist flowing inside is never affected by centrifugal force. Accordingly, the mist is neither liquidized by centrifugal force nor separated into each component due to the difference of relative density of components, thereby spouting from the tip of the tool in a uniformly distributed state.

Since this invention has a comparatively simple structure without any rotary joints, a mist of cutting oil can be distributed comparatively uniformly during spouting from the tip of each tool of plural spindles. Therefore, it is possible to effectively lubricate required parts of each tool machining deep parts of the workpiece.

In addition, because only the cutting oil supply pipe is provided inside the spindle, a diameter of the spindle can be comparatively small. Therefore, plural spindles can be arranged closely in a narrow space, thereby miniaturizing the device.

Moreover, its simple structure effects low cost, few mechanical failure, and an easy management of the device.

### BRIEF DESCRIPTION OF THE DRAWINGS

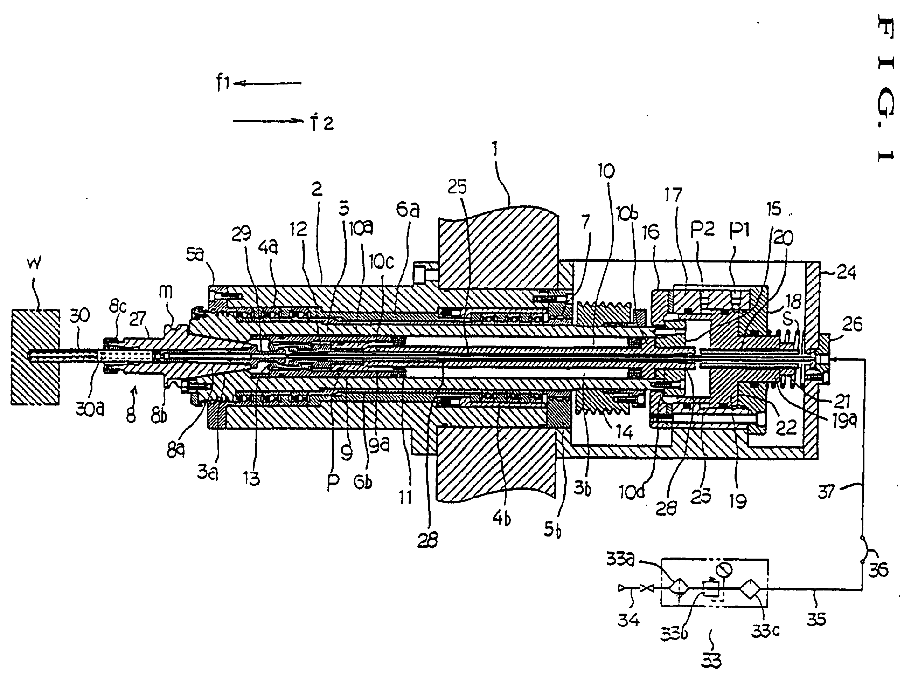

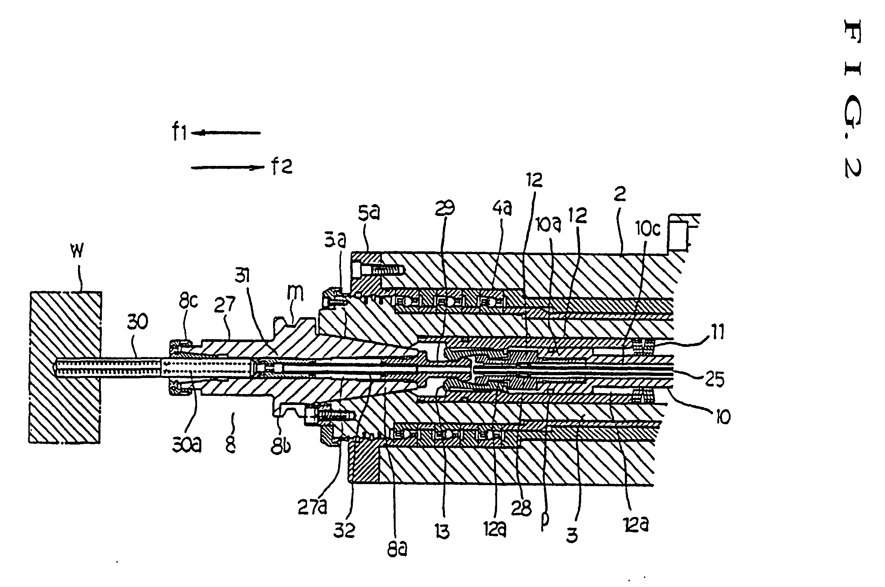

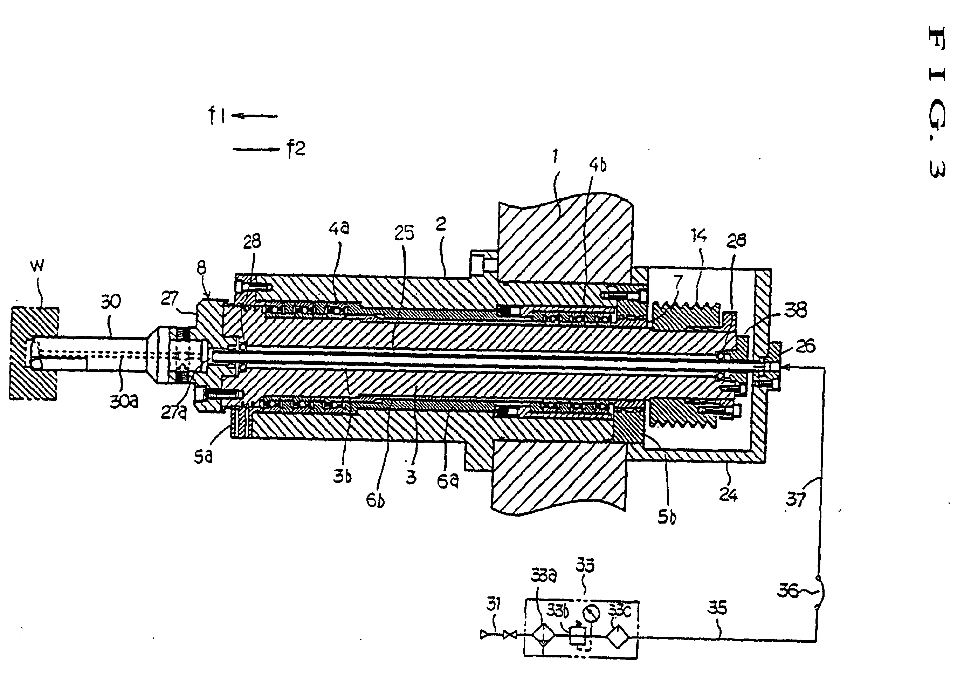

FIG. 1 to FIG. 3 relate to the first aspect. FIG 1 is a sectional view showing a spindle device related to the first embodiment of this invention, FIG. 2 is a partially enlarged sectional view of the spindle device, and FIG. 3 is a sectional view showing the spindle device related to the second embodiment of this invention.

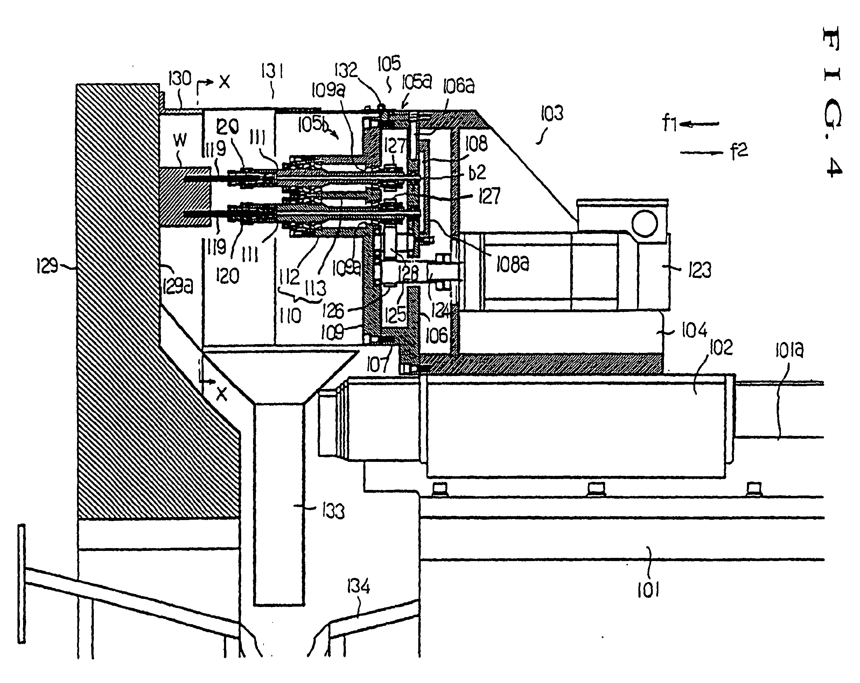

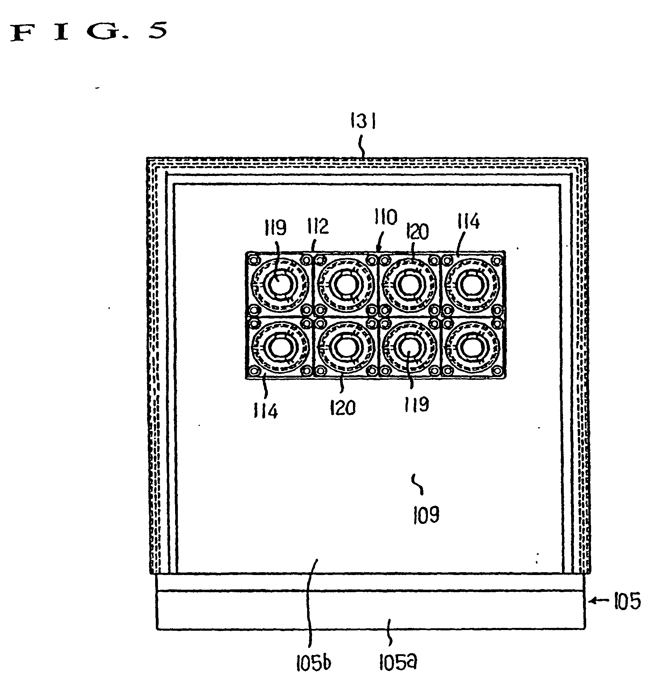

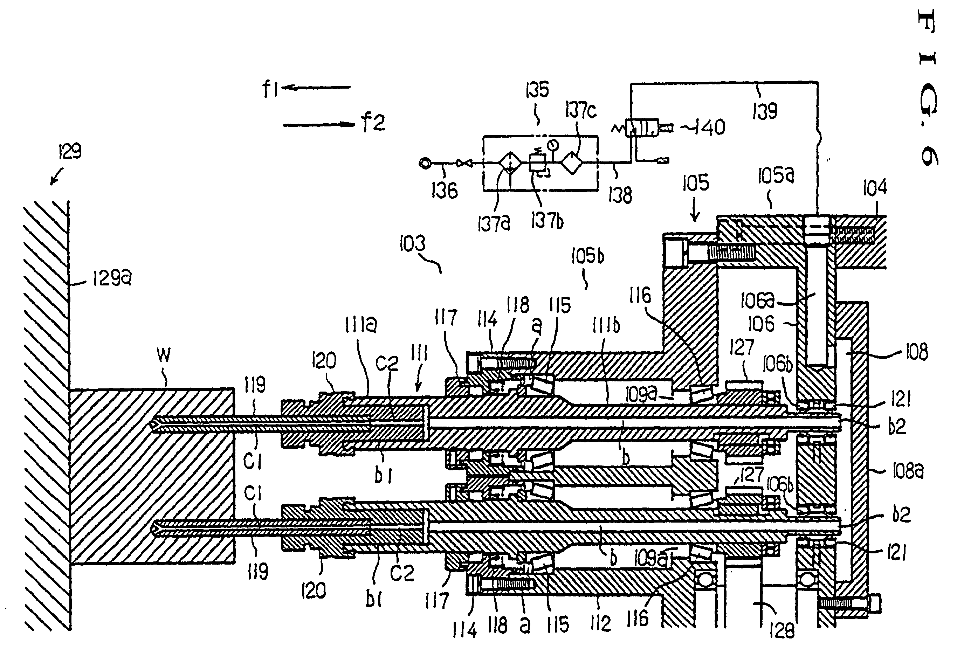

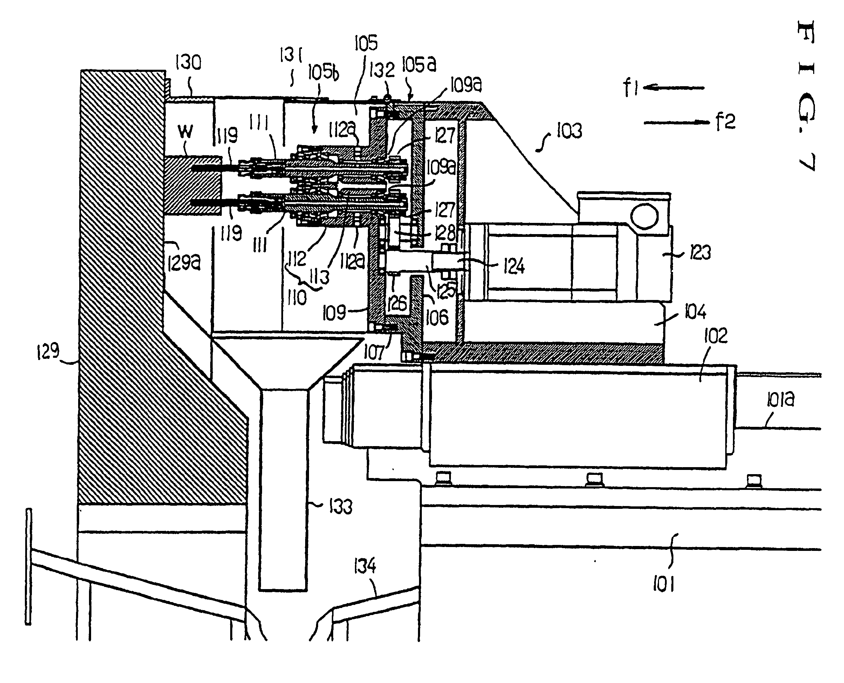

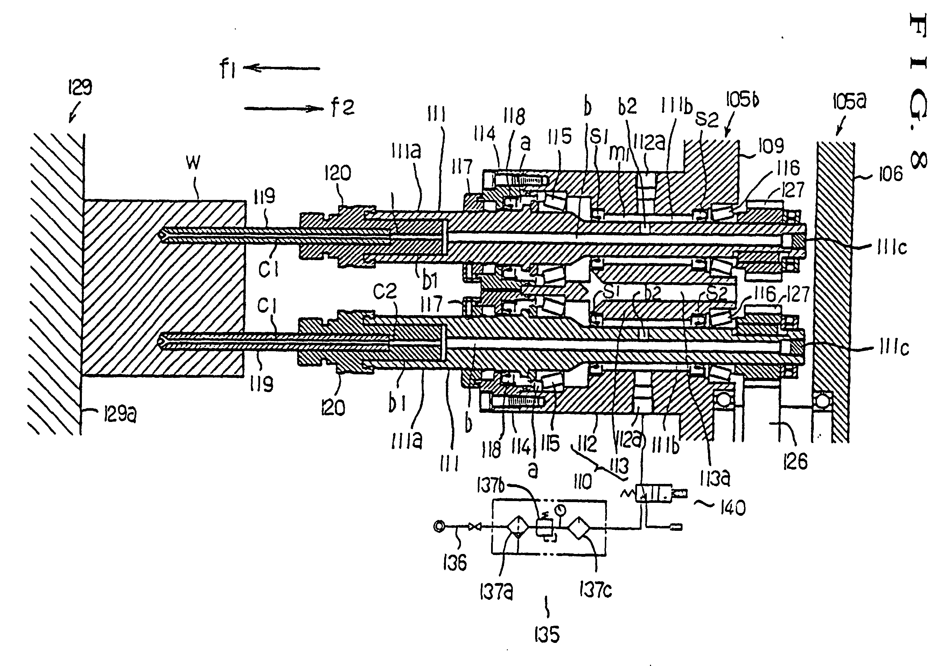

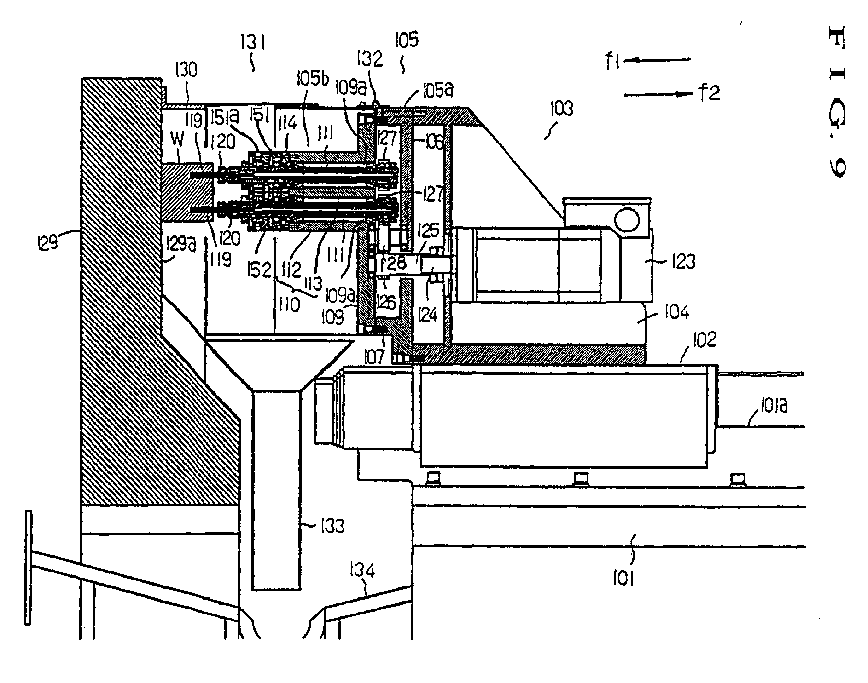

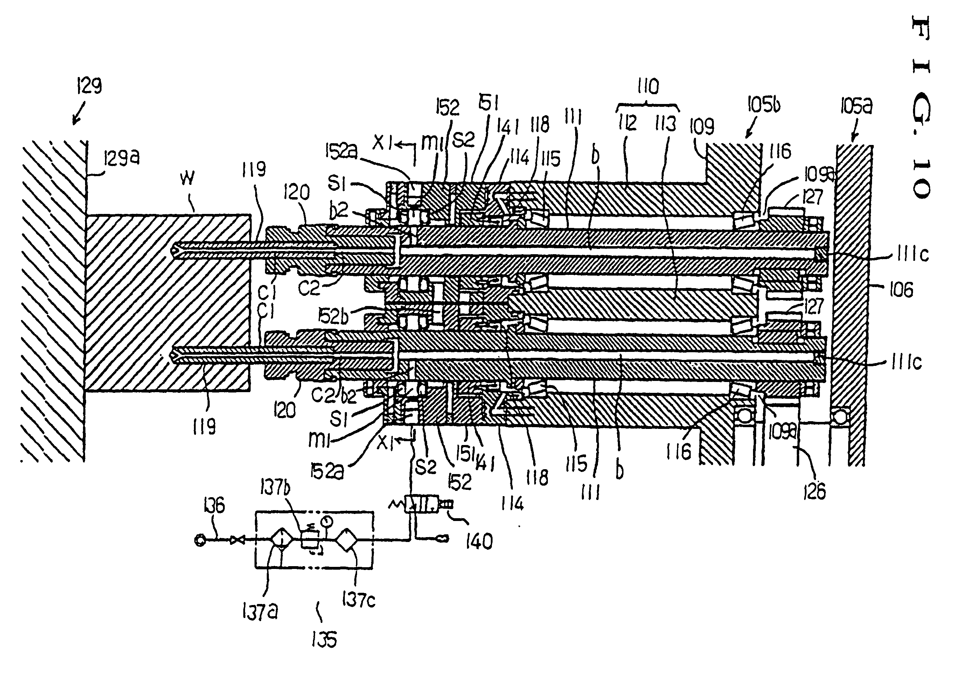

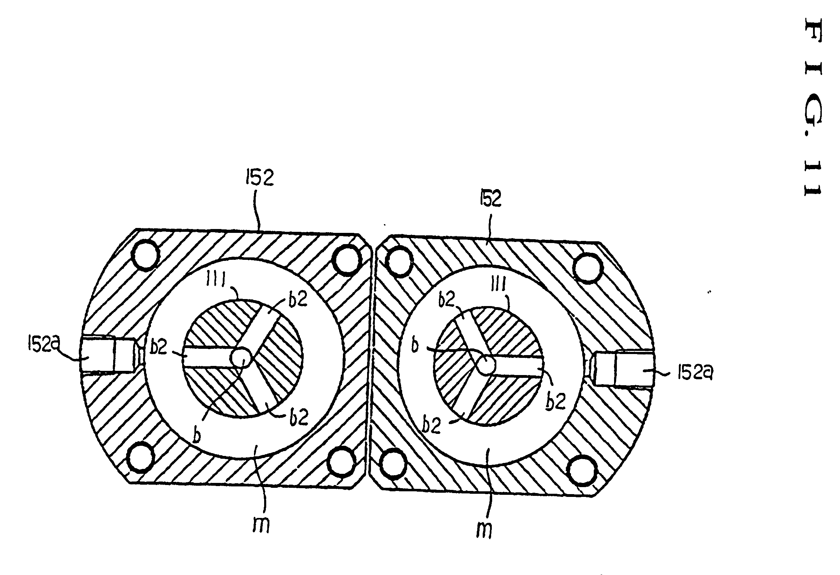

FIG. 4 to FIG. 13 relate to the second aspect. FIG. 4 is a sectional side view showing a main part of a machine tool having a multi spindle head, FIG. 5 is a view taken along the line x-x of FIG. 4, FIG. 6 is an enlarged sectional view of the spindle head, FIG. 7 is a sectional side view showing a main part of the machine tool having a multi spindle head, FIG. 8 is an enlarged sectional view of the spindle head, FIG. 9 is a sectional side view showing a main part of the machine tool having a multi spindle head, FIG. 10 is an enlarged sectional view of the spindle head, and FIG. 11 is a view taken along the line x1-x1 of FIG. 10.

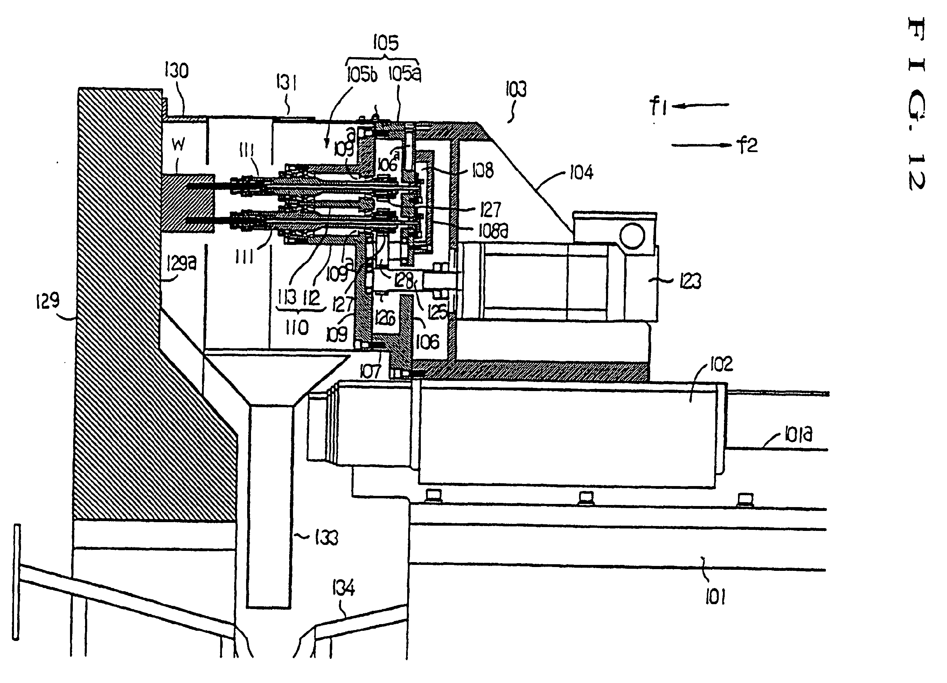

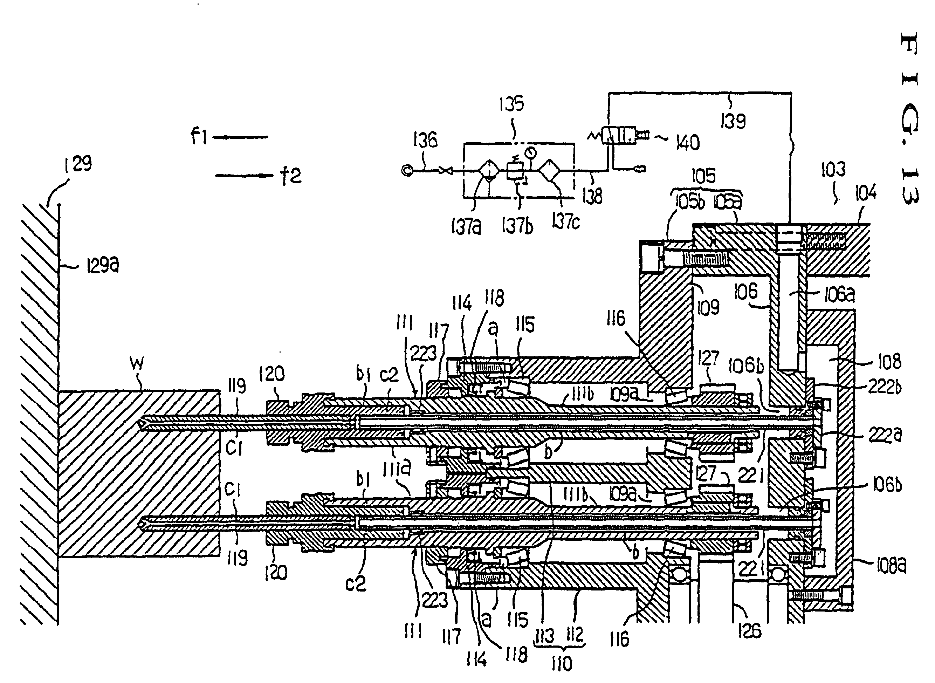

FIG. 12 and FIG. 13 relate to a third aspect. FIG. 12 is a sectional side view showing a main part of the machine tool having a multi spindle head, and FIG. 13 is a enlarged view of the spindle head.

### DESCRIPTION OF PREFFERED EMBODIMENTS

The first aspect of this invention is now described as the following. FIG. 1 is a sectional view showing a spindle device related to the first embodiment of this invention, and FIG. 2 is a partially enlarged sectional view of the spindle device.

In these drawings, 1 is a main frame of the spindle device, and 2 is a cylindrical supporting frame bolted to the main frame 1.

A main spindle 3 is internally inserted into the cylindrical supporting frame 2 so as to be rotatable at a fixed position by means of bearings 4a, 4b.

Here, 5a, 5b are ring members fixed to front and back end faces of the cylindrical supporting frame 2, respectively. The numerals 6a, 6b are cylindrical spacers to regulate each position of bearings 4a, 4b, and 7 is a screw ring to press a back face of an inner ring of the bearing 4b.

A tapered hole 3a for internally installing a taper shank 8a of a tool holder 8 is provided to the center of the front of the main spindle 3, and a straight center hole 3b is formed next to the tapered hole 3a.

The numeral 9 is a cylindrical guide member internally inserted into the front of the center hole 3b with its forward displacement restricted. Stairs of a proper shape are provided to an inner circumferential face 9a of the cylindrical guide member 9.

The numeral 10 is a draw bar, comprising an extensive portion 10a at the front, which is closely inserted into the cylindrical guide member 9 by means of a packing "p", a flanged portion 10b around the back end, which is guided by an inner circumferential face of the center hole 3b, and a straight hole 10c at the center.

Disk springs 11 are provided in the center hole 3b in the middle of the whole length of the draw bar 10 and between the flanged portion 10b and the back end of the cylindrical guide member 9 in a overlapped and compressed state.

A cylindrical holding member 12, which is screwed into the front of the draw bar 10, is to open and close a clamp member 13. A hollow 12a is formed to a peripheral face of the cylindrical holding member 12 so as to engage with the clamp member 13. The clamp member 13 comprises plural engaging pieces, which are arranged cylindrically to a circumference of the hollow 12a.

The numeral 14 is a pulley fixed to an outer circumference of the rear of the main spindle 3, whose rotations are regulated by an unillustrated motor through a belt.

The numeral 15 is an end face cover which is bolted to the back of the main spindle 3, and a rear end 10d of the draw bar 10 is internally inserted into a center hole of the end face cover 15 so as to be displaced in longitudinal directions f1, f2.

The numeral 16 is an engaging ring plate fitted externally to the rear of the main spindle 3. The engaging ring plate 16 is engaged with the end face cover 15, thereby being prevented from slipping out backward. A cylinder member 17 and a cylinder cover 18 are bolted in this order to the back of the engaging ring plate 16. In addition, a staged piston 19 is internally inserted into the cylinder cover 18.

The staged piston 19 comprises a center hole and a rear protruding portion 19a. The rear protruding portion 19a is internally inserted into the center hole of the cylinder cover 18 so as to be slidably displaced in longitudinal directions f1, f2.

Here, 20 is a threaded portion screwed into the center hole of the piston 19. The threaded portion 20 is displaced by its rotations, and fixed to a position by a lock nut 21.

The cylinder member 17 is provided with paths p1, p2. The path p1 is open to a cylinder room 22 behind the piston 19, while the path p2 is open to a cylinder room 23 before the piston 19.

The numeral 24 is a supporting frame fixed to the main frame 1, and 24 is a straight cutting oil supply pipe fixed to the supporting frame 1 by means of a coupling member 26.

The supporting frame 24 can slightly displace the cylinder member 17 in longitudinal directions. In addition, a spring "s" is provided between the cylinder cover 18 and the supporting frame 24 to press the cylinder cover 18 in a forward direction f1.

The cutting oil supply pipe 25 extends to the front of the cylindrical supporting member 12 from the coupling member 26 via each center hole of the threaded portion 20, the draw bar 10, and the cylindrical supporting member 12.

Here, needle bearing rings 28, 28 are mounted to the rear of the draw bar 10 and the inner of the center hole of the cylindrical supporting member 12 so that the cutting oil supply pipe 25 can rotate at a fixed position of the main spindle 3 relatively to the spindle 3. The needle bearing rings 28 contribute to displacing the cutting oil supply pipe 25 in longitudinal directions f1, f2 within a fixed range.

The tool holder 8 comprises a taper shank 8a, a flanged portion 8b and a chuck portion 8c, and the taper shank 8a is inserted into the taper hole 3a of the main spindle 3.

The rear of the taper shank 8a is provided with a pull stud 29 engaged with the clamp member 13. The flanged portion 8b is provided with a cavity "m" to be caught by an automatic tool changer when changing tools, and the chuck portion 8c is to fix a tool 30.

A center hole 27a is provided in a main body 27 of the tool holder 8. An internal member 31 is provided in the middle of the whole length of the center hole 27a, and a connecting pipe 32 is provided to connect a center hole of the internal member 31 with a center hole of the pull stud 29.

Though a tool 30 is not restricted to a drill, reamer, tap, mealing or else, it is necessary to have a path 30a extending from the back to the tip of the tool.

The numeral 33 is a cutting oil atomizing device to generate a mist of cutting oil, comprising a compressed air supply pipe 34, a filter 33a, a pressure control unit 33b, an atomizing device 33c, and a cutting oil transmitting pipe 35. The cutting oil transmitting pipe 35 connects with the coupling member 26 through a hose 36 and a pipe line 37, and communicates with the inner of the cutting oil supply pipe 25.

Example for use and operation of the above spindle device are as follows.

When extracting the tool holder 8 mounted in a manner shown in FIG. 1 and FIG. 2 from the main spindle 3, an unillustrated automatic tool changer grasps the flanged portion 8b of the tool holder 8, and then pressure fluid is supplied into the cylinder room 22. Therefore, the piston 19 is displaced to the forward direction f1 against elasticity of an unillustrated spring "s". When the piston 19 is displaced over a fixed dimension, the engaging ring plate 16 and the end face cover 15 are pressed so as to connect with each other. Then, the front of the threaded portion 20 presses the back of the draw bar 10, thereby displacing the draw bar 10 to the forward direction f1 against elasticity of the disk spring 11.

As the draw bar 10 is displaced forward, the cylindrical supporting member 12 and the clamp member 13 are displaced in the forward direction f1. When they are displaced over a fixed dimension, the front of the clamp member 13 comes off a protrusion of the inner circumferential face of the cylindrical supporting member 12, thereby displacing the front of the clamp member 13 outwards in a radius direction of the cylindrical supporting member 12.

In this state, the automatic tool changer gives force enough to draw the tool holder 8 in the forward direction f1. Since the clamp member 13 is released, the pull stud 29 comes off the clamp member 13 without being caught thereby, and therefore the tool holder 8 is pulled out of the main spindle 3.

On the other hand, when mounting the tool holder 8 on the main spindle 3, the draw bar 10 is now in the same state as the tool holder 8 is pulled out of the main spindle 3. In this state, the taper shank 8a of the tool holder 8 is inserted into the taper hole 3a of the main spindle 3 by the automatic tool changer. Here, because the clamp member 13 is released, the pull stud 29 is inserted into the clamp member 13 without being caught thereby.

After the insertion of the clamp member 13, pressured fluid inside the cylinder room 22 is discharged, while pressured fluid is supplied to the cylinder room 23. Therefore, the piston 19 is displaced backward, and the threaded portion 20 separates from the draw bar 10, and the draw bar 10 retreats to an original position shown in FIG. I with elasticity of the disk spring 11.

Due to the retreat of the draw bar 10, the outer circumference of the front of the clamp member 13 is pressed by a protrusion of an inner circumferential face of the cylindrical guiding member 9, thereby diminishing the diameter of the clamp member 13. Then, the tip of an inner circumferential face of the clamp member 13 engages with a neck of the pull stud 29, and pulls the pull stud 29 with elasticity of the disk spring 11. Therefore, the tool holder 8 is closely fitted into the main spindle 3. In this state, an interval between the back of the pull stud 29 and the front of the cutting oil supply pipe 25 is generally within 0.5 mm ~ 1 mm. Afterwards, the automatic tool changer releases the tool holder 8, and then retreats.

In machining a workpiece "w", the pulley 14 is rotated by an unillustrated motor. Accordingly, the main spindle 3 rotates, guided by means of the bearings 4a, 4b.

In this case, because the cylinder member 17 and the piston 19 are supported by the supporting frame 24, neither of them rotates. In addition, when the pressured fluid is supplied into the cylinder room 23, the engaging plate member 16 is displaced in the forward direction f1 by elasticity of the spring "s" so as to separate from the end face cover 15, thereby giving no rotatory resistance to the main spindle 3. Moreover, the piston 19 also separates from the end face cover 15, thereby giving no effect on rotations of the main spindle 3.

On the other hand, because the cutting oil supply pipe 25 is fixed integrally with the supporting frame 24, it does not rotate regardless of rotations of the main spindle 3.

In this state, the compressed air is supplied into the cutting oil atomizing device 33. Here, a mist of cutting oil is produced under an atomizer theory, and supplied to the back of the cutting oil supply pipe 25. A mist of cutting oil supplied in this way is spouted from the front of the cutting oil supply pipe 25. After reaching the back of the tool 30 through a central path of the tool holder 8, it is spouted from the tip of the tool 30 via the path 30a.

In this case, because a mist of cutting oil flowing in the cutting oil supply pipe 25 in the forward direction f1 is not affected by centrifugal force due to rotations of the main spindle 3, it reaches around the tool holder 8 without being liquidized or separated into each component due to the difference of relative density of components of the cutting oil, and spouts from the tip of the tool 30 comparatively uniformally.

Besides, though a mist of cutting oil spouted from the front of the cutting oil supply pipe 25 may flow backward along the outer circumferential face thereof, its flow is restricted by the front extensive portion 10a of the draw bar 10.

In this state, the spindle device is displaced for the workpiece "w" to machine it properly. Here, even if the tip of the tool 30 machines comparatively deep parts of the workpiece "w", the tool 30 is lubricated effectively and equally, thereby effecting an exact machining.

The second embodiment of this invention is described as the following. FIG. 3 is a sectional view showing a spindle device related to this embodiment. In this figure, the same marks are given to the substantially same positions as in the above embodiment.

As shown in FIG. 3, the tool holder 8 is bolted to the front of the main spindle 3, and the tool 30 is screwed up to the front of the tool holder 8.

As in the above embodiment, the cutting oil supply pipe 25 is also located inside the center hole 3b of the main spindle 3. However, since the cutting oil supply pipe 25 are not axially displaced, ball bearings are used for the bearings 28, 28 for guiding the front and rear of the cutting oil supply pipe 25.

It is not considered to attach and remove the tool holder 8 automatically by the automatic tool changer, and therefore neither cylinder members 17 nor pistons 19 are provided.

The front of the cutting oil supply pipe 25 is inserted into the center hole 27a of the tool holder 8, and a cover member 38 is bolted to close a space between the center hole 3b of the main spindle 3 and the cutting oil supply pipe 25.

In this case, the cutting oil supply pipe 25 passes through the center of the cover member 38 airtightly and rotatablely.

In this embodiment, the tool is manually exchanged.

When machining the workpiece "w", rotatory force is transmitted through the pulley 14 so as to rotate the main spindle 3, the tool holder 8, the tool 30, and the cover member 38. The cutting oil supply pipe 25, however, remains irrotational.

Afterward, a mist of cutting oil is supplied from the cutting oil atomizing device 33 into the cutting oil supply pipe 25 to machine the workpiece "w", as in the former embodiment.

In this embodiment, because the cutting oil supply pipe 25 does not rotate itself, a mist of cutting oil supplied therethrough lubricates the tip of the tool 30 effectively, even if it is machining comparatively deep parts of the workpiece "w".

FIG. 4 is a sectional side view showing a main part of the machine tool having a multi spindle head and not showing all features of the present invention, FIG. 5 is a view taken along the line x-x of FIG. 4, and FIG. 6 is an enlarged sectional view of the spindle head.

In these drawings, 101 is a bed, 102 is a carriage movable in the longitudinal directions f1, f2 through a guiding track 101a mounted on an upper face of the bed 101, and 103 is a multi spindle head fixed on an upper face of the movable carriage 102.

A concrete structure of the multi spindle head 103 is as follows:

The multi spindle head 103 comprises a head frame 104 fixed to the carriage 102, and a spindle part 105 provided to the front of the head frame 4. The spindle part 105 has a rear case frame 105a and a front case frame 105b.

The rear case frame 105a comprises a standing wall 106 and a side wall 107. A supply path 106a for supplying a mist of cutting oil from the outside is formed within a thickness of the standing wall 106. Besides, a wall member 108a is bolted to the rear of the standing wall 106 to form a closed room 108. Here, the supply path 106a is open to the closed room 108.

The front case frame 105b comprises a standing wall 109 and a spindle case 110. The standing wall 109 is bolted to the rear case frame 105a. As shown in FIG. 6, a through hole 109a, in which the spindle 111 is inserted, is formed for every spindle 111 in front of the closed room 108.

The spindle case 110 comprises an external square wall 112 for surrounding plural spindles 111, and an intermediate wall 113 for surrounding each spindle 111 thereinside.

As shown in FIG. 6, a circular through hole "a" is formed at the front of the external wall 112 for every spindle 111. Besides, a front face cover 114, in which the spindle 1111 is inserted, is bolted to the front of each through hole "a".

Each spindle 111 comprises a front part of large diameter 111a and a rear part of short diameter 11b, and is rotatably supported at a fixed position on the front case frame 105b by means of bearings 115 engaged with the through holes "a" and bearings 116 engaged with the through holes 109a. A straight through hole "b" for cutting oil is provided to the axial center of each spindle 111, and a front part b1 of the straight through hole "b" is enlarged in diameter.

Here, 117 is a cover member to cover the front of the front face cover 114, fixed to each spindle 111. The numeral 118 is an oil seal fixed to the inside of the front face cover 114.

A tool holder 120 having a tool 119 is engaged with the front part b1 of the through hole "b" for cutting oil. Through holes c1, c2 for cutting oil are formed to each axial center of the tool 119 and the tool holder 120.

The rear of each spindle 111 is located inside a hole 106b provided at the standing wall 106 of the rear case frame 105a, and the back of through hole "b" is airtightly open to the closed room 108 through a sealing member 121.

Each spindle 111 is driven by a spindle driving motor 123 mounted to the head frame 104. A concrete construction is as follows.

A driving shaft 125 combined with an output axle 124 of the spindle driving motor 123 is provided to the front and rear case frames 105a, 105b so as to be rotated freely at a fixed position. Besides, a driving gear 126 is provided to the front of the driving shaft 125.

Moreover, a driven gear 127 is fixed to the rear of each spindle 111, and connected to the driving gear 126 by means of a line of plural intermediate gears 128. Each spindle rotates approximately at a speed of less than 500 rotations per minute.

A workpiece locking table 129 is provided in front of thus constructed multi spindle head 103 so as to locate in a relative position to the bed 101. A surrounding frame member 130 is fixed around a workpiece supporting face 129a of the workpiece locking table 129.

The numeral 131 is a cover device mounted to the front of the multi spindle head 103 so as to be retractable in the longitudinal directions f1, f2 as well as be displaceable upward around a pivot 132. When machining the workpiece "w", the cover device 131 closely contacts the surrounding frame member 130, surrounding the workpiece "w" and the front of the multi spindle head 103 with the bottom open.

The numeral 133 is a guiding hopper for chips and cutting oil, covering the bottom of the cover device 131. In addition, 134 is a guiding face device to guide cutting oil dropping off the guiding hopper 133 to a proper position.

The numeral 135 is a cutting oil atomizing device to produce a mist of cutting oil, comprising a compressed air supply pipe 136, a filter 137a, a pressure control unit 137b, an atomizing device 137c, and a cutting oil transmitting pipe 137. The cutting oil transmitting pipe 138 communicates with the supply path 106a through a pipe 139, and an electromagnetic valve 140 is provided in the middle of the pipe 139 so as to be opened or closed timely.

Examples for use and operation of the above device are as follows.

When fixing the workpiece "w", the carriage 102 is displaced from a position shown in FIG. 4 to the backward direction f2. Accordingly, the front edge of the cover device 131 separates from the surrounding frame member 130. Then, the cover device 131 is extended to the maximum in the longitudinal direction by an unillustrated energizing means. Afterward, the cover device 133 is retracted upward around the pivot 132 from a position shown in FIG. 4, thereby securing a wide working space. In this state, the workpiece "w" is fixed to the workpiece supporting face 129a of the workpiece locking table 129.

Then, the cover device 131 is put back to the original position, and the spindle driving motor 123 is operated. Accordingly, rotary force of the motor 123 is transmitted to each spindle 111 through the gears 126, 127, 128, and each spindle 111 rotates smoothly at a speed of less than 5000 rotations per minute, guided by the bearings 115, 116.

On the other hand, the electromagnetic valve 140 is opened. Then, compressed air supplied from the compressed air supply pipe 136 flows inside the atomizing device 137c, and the atomizing device 137c generates a mist of cutting oil under an atomizer theory.

After reaching inside the closed room 108 via the supply path 106a, a mist of cutting oil is supplied into the through hole "b" for cutting oil of each spindle 111 therefrom, flowing in the forward direction f1. The sealing means 121 helps a mist of cutting oil in the closed room 108 to flow into the through hole "b" for cutting oil without any leakage to the outside during rotations of the spindle 111. Since the spindle 111 rotates at a comparatively low speed, a mist of cutting oil flowing inside the through hole "b" for cutting oil is not much affected by the centrifugal force caused by rotations of the spindle 111. Therefore, the mist is hardly liquidized or separated into each component of the cutting oil due to the difference of relative density of components, but distributed equally in the through hole "b" for cutting oil.

A mist of cutting oil is comparatively equally spouted from the tip of the tool 119 through the tool holder 120 and the through holes c1, c2 for cutting oil of the tool 119.

Then, the carriage 102 is displaced in the forward direction f1. During this displacement, the front edge of the cover device 131 is pressed to contact with the back of the surrounding frame member 130. Afterward, the cover device 131, being pressed, is shortened in accordance with the forward displacement of the carriage 102 against the elasticity of an unillustrated energizing means.

When the carriage 102 is displaced forward for a fixed distance, the tool 119 reaches the workpiece "w" and machines it. Because a mist of cutting oil spouts from the tip of the tool 119 during this machining, it lubricates required parts effectively, even if the tool 119 machines deep parts of the workpiece "w".

In this invention, a mist of cutting oil is supplied into the spindle 111 through the through hole "b" of the spindle 111 during rotations thereof. Therefore, no atomizing nozzle is necessary in the spindle 111, which is effective especially when a narrow spindle 111 is required.

When removing the workpiece whose treatment is done from the workpiece locking table 129, procedures are revers to those in mounting the workpiece.

FIG. 7 is a sectional side view showing a main part of another machine tool having a multi spindle head not comprising all features of the present invention and FIG. 8 is an enlarged sectional view of the spindle head.

In this embodiment, the back of the through hole "b" for cutting oil of each spindle 111 is sealed by a tapping member 11c. Besides, a cave hole b2, which is an opening for the through hole "b" for cutting oil, is provided in the middle of the length of each spindle 111.

Moreover, a space between the front and rear bearings 115, 116 of each spindle 111 in the front case frame 105b is formed into a closed space m1 by means of front and rear sealing members s1, s2. A supply path 112a is provided to an outer wall 112 of each closed space m1 to supply a mist of cutting oil from the outside to the inside. Here, the scaling means s1, s2 keep the closed space m1 airtightly.

A path 113a is formed to a thick part of an intermediate wall 113 to discharge lubricant and cutting oil backward. Other constructions are the same as in the above embodiment.

When using the machine tool, the electromagnetic valve 140 is opened in accordance with necessity during rotations of each spindle 111, so that the atomizing device 137c produces a mist of cutting oil. The mist is supplied into the closed space m1 through the supply path 112a, and then into the through hole "b" for cutting oil through the cave hole b2 to spout from the tip of the tool 119. Accordingly, this embodiment also has the same effects of the above embodiment.

All the closed spaces m1 of each spindle 111 can be combined to form one space, so that a mist of cutting oil may be supplied into this space.

FIG. 9 is a sectional side view showing a main part of another machine tool having a multi spindle head not comprising all features of the invention, FIG. 10 is an enlarged sectional view of the spindle head, and FIG. 11 is a view taken along the line x1-x1 of FIG. 10.

Each spindle 111 has a uniform diameter over the whole length. The back of the through hole "b" for cutting oil is sealed by the tapping member 111c, and the cave hole b2, which is an opening for the through hole "b" for cutting oil, is provided to the front of each spindle 111.

An intermediate plate 151 and a room wall member 152 are fixed to the front face of the front face cover 114 and an intermediate plate 151, respectively. The sealing members s1, s2 are provided to the front and back of the above cave holes b2 in the room wall member 152, and a space therebetween is formed into a closed space ml. The room wall member 152 is provided with a supply path 152a to supply a mist of cutting oil from the outside to the inside of the closed space ml.

The numeral 152b is a path to discharge cutting oil leaking out the sealing members s1, s2 to the outside, and 141 is a ring member to hold an oil seal 118.

Other constructions are the same as in the above embodiments.

During use, the atomizing device 137c generates a mist of cutting oil. The mist is supplied into the closed space ml through the supply path 152a, and then into the through hole "b" for cutting oil through the cave hole b2 to spout from the tip of the tool 119.

In this embodiment as well, all the closed spaces m of each spindle 111 are combined to form one space, so that a mist of cutting oil may be supplied into this space.

FIG. 12 is a sectional side view showing a main part of a machine tool having a multi spindle head related to the embodiment of this invention, and FIG. 13 is an enlarged view of the spindle head.

In these drawings, the same marks are given to the same positions as in the above embodiments to simplify an explanation.

Each spindle 111 is provided with a straight through hole "b" having a comparatively large diameter at axial center thereof, and a front part b1 of the through hole b has a larger diameter.

A tool holder 120 fixing the tool 119 is fitted to the front part b1 of the through hole "b".

A straight cutting oil supply pipe 221 having a thinner diameter than the through hole "b" is provided inside the through hole "b" concentrically with the spindle 111. The rear of the supply pipe 221 is located in the hole 106b of the standing wall 106 of the rear case frame 105a, and is open to the closed room 108 fixed on the standing wall 106 through connecting members 222a, 222b and packings. Besides, the front thereof is located in the through hole c2 for cutting oil of the tool holder 120.

In this case, a bearing 223 is provided between the front of the cutting oil supply pipe 221 and the through hole "b" so that the cutting oil supply pipe 221 may not prevent the spindle 111 from rotating smoothly. In addition, though it is not illustrated, a proper sealing means is provided between an outer face of the cutting oil supply pipe 221 and an inner circumferential face of the through hole "b" to prevent a mist of cutting oil spouted from the front of the cutting oil supply pipe 221 from flowing backward in the through hole "b". A filler or labyrinth sealing is used for the sealing means.

Other constructions are the same as in the embodiment of a multi-spindle had shown in Fig. 4 to 6.

Examples for use and operation of the above device are as follows. As in the above invention, the workpiece "w" is fixed to the workpiece supporting face 129a of the workpiece locking table 129, and the spindle driving motor 123 is driven to rotate each spindle 111.

While each spindle 111 is rotating, the cutting oil supply pipe 221 remains irrotational, because it is fixed to the standing wall 106. Here, the bearing 223 surely prevents the cutting oil supply pipe 221 from contacting with the spindle 111.

On the other hand, as in the above invention, the electromagnetic valve 140 is opened in accordance with necessity. Therefore, compressed air supplied from the compressed air supply pipe 136 flows into the atomizing device 137c, and then the atomizing device 137c generates a mist of cutting oil under an atomizer theory.

After reaching inside the closed room 108 via the supply path 106a, the mist is supplied into each cutting oil supply pipe 221 therefrom, and flows thereinside in the forward direction f1. Even while the spindle 111 is rotating, the mist flowing inside the cutting oil supply pipe 221 is not affected by the centrifugal force caused by rotations of the spindle 111, because the cutting oil supply pipe 221 itself does not rotate. Accordingly, the mist is neither liquidized due to the centrifugal force nor separated into each component due to the difference of relative density of components of the cutting oil, thereby distributed equally in the cutting oil supply pipe 221.

The cutting oil soon spouts from the front of the cutting oil supply pipe 221, and then spouts from the tip of the tool 119 through the tool holder 120 and the through holes c1, c2 for cutting oil of the tool 119 in a comparatively equally distributed state.

Next, the carriage 102 is displaced in the forward direction f1 as in the above invention. Accordingly, the tool 119 gets at the workpiece "w", and machines it. During this machining, a mist of cutting oil passing through the cutting oil supply pipe 221 spouts from the tip of each tool 119, and lubricates effectively required parts, even if each tool 119 machines deep parts of the workpiece "w".

## Claims

1. A spindle device for machine tool comprising:
a main spindle (3) having a tool holder (8) and a tool (30) at the tip thereof;
axial holes (10c, 3b) provided at the center of said spindle (3), extending from the outer end to the tip end of the main spindle (3); and
a cutting oil supply pipe (25) provided in said axial hole (10c); said cutting oil supply pipe being irrotatable regardless of rotations of the main spindle (3);
wherein a mist of cutting oil is supplied from the outer end of the main spindle (3) into the cutting oil supply pipe (25), and spouted from the tip of the tool (30), **characterized in that** bearings (28) guide the front and rear of the cutting oil supply pipe (25).

2. A multi spindle head for machine tool comprising:
plural spindle devices (111) according to claim 1 arranged in the same direction;
wherein a through hole (b) for cutting oil provided at the center of each spindle in longitudinal direction thereof; and
a through hole (c1) for cutting oil provided in the tool (119) at the tip of each spindle (111) communicate with each other.

3. A multi spindle head for machine tool as set forth in claim 2 further comprising:
a closed room (108) integrated with the spindle head;
wherein the rear of each spindle (111) protrudes in said closed room (108); and
wherein a mist of cutting oil is supplied into said closed room (108) from the outside.

4. A multi spindle head for machine tool as set forth in claim 2 further comprising:
a cave hole (b2) provided to an outer periphery of each spindle (111) in the middle of the length thereof, said cave hole (b2) communicating with the through hole (b) for cutting oil provided at the center of the spindle (111) in longitudinal direction thereof; and
a closed room (m1) provided between bearings to surround said cave hole (b2);
wherein a mist of cutting oil is supplied into said closed room (m1) from the outside.

5. A multi spindle head for machine tool as set forth in claim 2 further comprising:
a cave hole (b2) provided to an outer periphery of each spindle (111) at the tip thereof, said cave hole (b2) communicating with the through hole (b) for cutting oil provided at the center of the spindle (111) in longitudinal direction thereof; and
a closed room (ml) provided between bearings to surround said cave hole (b2);
wherein a mist of cutting oil is supplied into said closed room (m1) from the outside.

## Patentansprüche

1. Spindeleinrichtung für eine Werkzeugmaschine, enthaltend:
eine Hauptspindel (3), die einen Werkzeughalter (8) und ein Werkzeug (30) an ihrem vorderen Ende aufweist;
axiale Löcher (10c, 3b), die im Zentrum der Spindel (3) vorgesehen sind, die sich vom äußeren Ende zum vorderen Ende der Hauptspindel (3) erstrecken; und
eine Schneidflüssigkeitszufuhrleitung (25), die in dem axialen Loch (10c) vorgesehen ist;
wobei die Schneidflüssigkeitszufuhrleitung unabhängig von den Drehungen der Hauptspindel (3) undrehbar ist;
wobei ein Nebel aus Schneidflüssigkeit vom äußeren Ende der Hauptspindel (3) in die Schneidflüssigkeitszufuhrleitung (25) zugeführt wird und aus dem vorderen Ende des Werkzeuges (30) ausgespritzt wird,
**dadurch gekennzeichnet, dass**
Lager (28) den vorderen und hinteren Teil der Schneidflüssigkeitszufuhrleitung (25) führen.

2. Mehrfachspindelkopf für eine Werkzeugmaschine, enthaltend:
mehrere Spindeleinrichtungen (111) nach Anspruch 1, die in der gleichen Richtung angeordnet sind;
wobei ein Durchgangsloch (b) für Schneidflüssigkeit, das im Zentrum jeder Spindel in Längsrichtung davon vorgesehen ist, und ein Durchgangsloch (c1) für Schneidschneidflüssigkeit, das in dem Werkzeug (119) am vorderen Ende jeder Spindel (111) vorgesehen ist, miteinander in Verbindung stehen.

3. Mehrfachspindelkopf für eine Werkzeugmaschine nach Anspruch 2, weiter enthaltend:
einen geschlossenen Raum (108), der mit dem Spindelkopf integriert ist;
wobei das hintere Ende jeder Spindel (111) in den geschlossenen Raum (108) vorsteht; und
wobei ein Nebel aus Schneidflüssigkeit in den geschlossenen Raum (108) von der Außenseite her zugeführt wird.

4. Mehrfachspindelkopf für eine Werkzeugmaschine nach Anspruch 2, weiter enthaltend:
ein Höhlenloch (b2), das an einem äußeren Umfang jeder Spindel (111) in der Mitte deren Länge vorgesehen ist, wobei das Höhlenloch (b2) mit dem Durchgangsloch (b) für Schneidflüssigkeit, das im Zentrum der Spindel (111) in deren Längsrichtung vorgesehen ist, in Verbindung steht; und
einen geschlossenen Raum (ml), der zwischen Lagern vorgesehen ist, dass er das Höhlenlochs (b2) umgibt;
wobei ein Nebel aus Schneidflüssigkeit in den geschlossenen Raum (ml) von der Umgebung her zugeführt wird.

5. Mehrfachspindelkopf für eine Werkzeugmaschine nach Anspruch 2, weiter enthaltend:
ein Höhlenloch (b2), das an einem äußeren Umfang jeder Spindel (111) an deren vorderem Ende vorgesehen ist, wobei das Höhlenloch (b2) mit dem Durchgangsloch (b) für Schneidflüssigkeit in Verbindung steht, das im Zentrum der Spindel (111) in deren Längsrichtung vorgesehen ist; und
einen geschlossenen Raum (ml), der zwischen Lagern vorgesehen ist, dass er das Höhlenloch (b2) umgibt;
wobei ein Nebel aus Schneidflüssigkeit in den geschlossenen Raum (ml) von der Umgebung her zugeführt wird.

## Revendications

1. Dispositif formant broche pour machine-outil comprenant:
une broche principale (3) dotée d'un porte-outil (8) et d'un outil (30) au niveau de sa pointe;
des trous axiaux (10c, 3b) prévus au centre de ladite broche (3) s'étendant de l'extrémité externe à l'extrémité de pointe de la broche principale (3); et
un tuyau d'alimentation d'huile de coupe (25) prévu dans ledit trou axial (10c); ledit tuyau d'alimentation ne tournant pas indépendamment des rotations de la broche principale (3) ;
dans lequel un brouillard d'huile de coupe est alimenté à partir de l'extrémité externe de la broche principale (3) dans le tuyau d'alimentation d'huile de coupe (25), et expulsé par la pointe de l'outil (30), **caractérisé en ce que** les paliers (28) guident l'avant et l'arrière du tuyau d'alimentation d'huile de coupe (25).

2. Tête. multibroche pour machine-outil comprenant:
plusieurs dispositifs formant broches (111) selon la revendication 1, agencés dans la même direction,
dans laquelle un trou débouchant (b) pour huile de coupe prévu au centre de chaque broche dans sa direction longitudinale, et un trou débouchant (c1) pour huile de coupe prévu dans l'outil (119) au niveau de la pointe de chaque broche (111) communiquent entre eux.

3. Tête multibroche pour machine-outil selon la revendication 2, comprenant en outre:
une chambre fermée (108) intégrée avec la tête de broche;
dans laquelle l'arrière de chaque broche (111) fait saillie dans ladite chambre fermée (108); et
dans laquelle un brouillard d'huile de coupe est alimenté dans ladite chambre fermée (108) à partir de l'extérieur.

4. Tête multibroche pour machine-outil selon la revendication 2, comprenant en outre:
un trou caverneux (b2) prévu sur une périphérie externe de chaque broche (111) au milieu de sa longueur, ledit trou caverneux (b2) communiquant avec le trou débouchant (b) pour huile de coupe prévu au centre de la broche (111) dans sa direction longitudinale; et
une chambre fermée (m1) prévue entre des paliers pour entourer ledit trou caverneux (b2);
dans laquelle un brouillard d'huile de coupe est alimenté dans ladite chambre fermée (m1) à partir de l'extérieur.

5. Tête multibroche pour machine-outil selon la revendication 2, comprenant en outre:
un trou caverneux (b2) prévu sur une périphérie externe de chaque broche (111) au niveau de sa pointe, ledit trou caverneux (b2) communiquant avec le trou débouchant (b) pour huile de coupe prévu au centre de la broche (111) dans sa direction longitudinale; et
une chambre fermée (ml) prévue entre les paliers pour entourer ledit trou caverneux (b2);
dans laquelle un brouillard d'huile de coupe est alimenté dans ladite chambre fermée (m1) à partir de l'extérieur.
